(19) **Europäisches Patentamt**
**European Patent Office**
**Office européen des brevets**

(11) Veröffentlichungsnummer : **0 495 442 B1**

(12) # EUROPÄISCHE PATENTSCHRIFT

(45) Veröffentlichungstag der Patentschrift :
**08.06.94 Patentblatt 94/23**

(51) Int. Cl.$^5$ : **B62D 33/06, B62D 33/10**

(21) Anmeldenummer : **92100476.8**

(22) Anmeldetag : **14.01.92**

(54) **Hydropneumatisches Federungssystem insbesondere für KFZ-Fahrerkabinen.**

(30) Priorität : **17.01.91 DE 4101221**

(43) Veröffentlichungstag der Anmeldung :
**22.07.92 Patentblatt 92/30**

(45) Bekanntmachung des Hinweises auf die
Patenterteilung :
**08.06.94 Patentblatt 94/23**

(84) Benannte Vertragsstaaten :
**AT BE DE ES FR GB IT NL SE**

(56) Entgegenhaltungen :
**EP-A- 0 089 794**
**EP-A- 0 121 968**
**DE-A- 2 806 247**
**DE-A- 3 239 006**
**DE-A- 3 910 119**

(73) Patentinhaber : **HEMSCHEIDT**
**FAHRWERKTECHNIK GmbH & Co. KG**
**Bornberg 97**
**D-42109 Wuppertal (DE)**

(72) Erfinder : **Runkel, Walter Dr., Dipl.-Ing.**
**Mendelssohnweg 30**
**W-5600 Wuppertal 2 (DE)**

(74) Vertreter : **Patentanwälte Dr. Solf & Zapf**
**Postfach 13 01 13**
**D-42028 Wuppertal (DE)**

EP 0 495 442 B1

Jouve, 18, rue Saint-Denis, 75001 PARIS

**Beschreibung**

Die vorliegende Erfindung betrifft ein hydropneumatisches Federungssystem zur federnden Abstützung einer Masse, insbesondere einer Fahrerkabine eines Lastkraftwagens oder dergleichen.

Zur federnden Abstützung von LKW-Fahrerkabinen (Führerhäusern) sind diese bisher üblicherweise auf elastischen Gummifederelementen gelagert. Diese Möglichkeit ist zwar sehr kostengünstig, jedoch hinsichtlich der Federungseigenschaften höchst unbefriedigend, so daß die sich während der Fahrt im Fahrerhaus aufhaltende(n) Person(en) harten Stößen ausgesetzt ist (sind), was auf Dauer zu Gesundheitsschädigungen führen kann.

Des weiteren ist es bekannt, Fahrerkabinen über Gasfedern (Luftfedern) abzustützen, die aber stets sehr ausgeprägt zum Schwingen neigen, so daß zusätzliche Dämpfungselemente notwendig sind. Auch derartige Systeme bieten noch nicht den gewünschten Komfort.

Ein hydropneumatisches System gemäß dem Oberbegriff des Anspruchs 1 ist aus der DE-A-32 39 006 bekannt.

Der Erfindung liegt daher die Aufgabe zugrunde, ein insbesondere zur Abstützung von Fahrerkabinen geeignetes Federungssystem zu schaffen, welches sich durch verbesserte, komfortsteigernde Federungseigenschaften bei gleichzeitig allenfalls geringen Mehrkosten gegenüber bekannten Systemen auszeichnet.

Erfindungsgemäß wird dies durch ein hydropneumatisches Federungssystem mit den Merkmalen des Patentanspruches 1 erreicht. Vorteilhafte Weiterbildungen und Ausgestaltungsmerkmale der Erfindung sind in den Unteransprüchen enthalten.

Aufgrund der erfindungsgemäßen Verschaltung der hydraulischen Kolbenzylindereinheiten reichen vorteilhafterweise lediglich zwei hydropneumatische Federspeicher aus, um alle auftretenden Stoß- und Kippbewegungen elastisch aufzunehmen. Hierbei ist es besonders vorteilhaft, vier Kolbenzylindereinheiten jeweils etwa symmetrisch zu einer in Fahrtrichtung verlaufenden Kippachse sowie zu einer hierzu quer (senkrecht) verlaufenden Kippachse anzuordnen, wobei die beiden, aus jeweils zwei Kolbenzylindereinheiten bestehenden Gruppen beidseitig der in Fahrtrichtung verlaufenden Kippachse jeweils im seitlichen Bereich der Fahrerkabine angeordnet sind.

Das erfindungsgemäße, hydropneumatische Federungssystem bietet eine Reihe von wesentlichen Vorteilen, die eventuelle Mehrkosten durchaus vertretbar machen. So können durch spezielle Auslegung der Federspeicher im Bereich beidseitig der statischen Belastung sehr flach verlaufende Federkennlinien realisiert werden, die einen hohen Komfort garantieren, denn hierdurch werden sogar Stöße oder Schwingungen mit geringen Amplituden und gegebenenfalls hoher Frequenz federelastisch aufgenommen. Zudem ist es durch den Einsatz von hydraulischen Kolbenzylindereinheiten auch auf besonders einfache Weise möglich, die Federungsbewegungen zu dämpfen und so Schwingungen wirksam zu verhindern. Ferner kann vorteilhafterweise auch eine Nivellierung vorgesehen sein, d.h. eine Einstellmöglichkeit der Niveaulage der Kolbenzylindereinheiten und damit auch des Fahrerhauses zur Anpassung an unterschiedliche Belastungen bzw. Zuladungen.

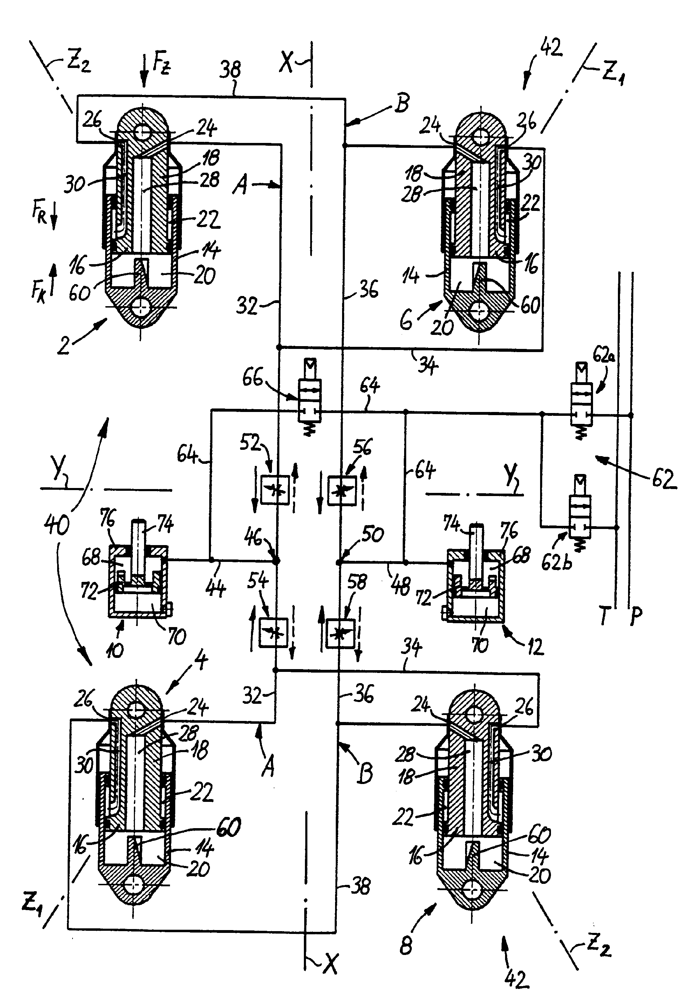

Im folgenden soll nun anhand eines in der Zeichnung dargestellten Ausführungsbeispiels die Erfindung näher erläutert werden. Hierzu zeigt die einzige Zeichnungsfigur eine vereinfachte, schematische Hydraulikschaltung eines erfindungsgemäßen Federungssystems, wobei die einzelnen Komponenten (Kolbenzylindereinheiten, Federspeicher) jeweils im Längsschnitt dargestellt sind.

Ein erfindungsgemäßes Federungssystem besteht im dargestellten Beispiel aus insgesamt vier hydraulischen Kolbenzylindereinheiten 2, 4, 6 und 8, die hydraulisch miteinander sowie mit insgesamt zwei hydropneumatischen Federspeichern 10 und 12 verschaltet sind. Jede Kolbenzylindereinheit besteht aus einem Zylinder 14, in dem ein Kolben 16 axialbeweglich geführt ist. Der Kolben 16 ist mechanisch mit einer Kolbenstange 18 verbunden, die gegen den Zylinder 14 über eine Umfangsdichtung abgedichtet nach außen geführt ist. Dabei werden vorzugsweise die Kolbenstangen 18 mit ihren freien Enden mit der abzustützenden Masse, insbesondere einer nicht dargestellten Fahrerkabine eines Lastkraftwagens, verbunden, während die Zylinder 14 insbesondere mit dem Fahrzeugrahmen verbunden sind. Es liegt jedoch ebenfalls im Rahmen der Erfindung, die Kolbenzylindereinheiten "umgekehrt" anzuordnen. Bei jeder Kolbenzylindereinheit teilt der Kolben 16 innerhalb des Zylinders 14 einen dem geschlossenen Zylinderende zugekehrten Zylinderraum 20 von einem die Kolbenstange 18 umschließenden Ringraum 22 ab. Sowohl in den Zylinderraum 20 als auch in den Ringraum 22 mündet jeweils ein im freien Endbereich der Kolbenstange 18 angeordneter Anschluß 24, 26, und zwar jeweils über einen in axialer Richtung durch die Kolbenstange 18 verlaufenden Kanal 28, 30.

Erfindungsgemäß ist nun der Zylinderraum 20 der ersten Kolbenzylindereinheit 2 über eine Leitungsverbindung 32 mit dem Zylinderraum 20 der zweiten Kolbenzylindereinheit 4 hydraulisch verbunden. Ferner sind die Zylinderräume 20 dieser ersten beiden Kolbenzylindereinheiten 2 und 4 über Leitungsverbindungen 34 auch mit den Ringräumen 22 der dritten und vierten Kolbenzylindereinheit 6, 8 verbunden. Des weiteren sind erfindungsgemäß die Zylinderräume 20 der dritten und vierten Kolbenzylindereinheit 6, 8 einerseits über eine Leitungsverbindung 36 miteinander sowie andererseits über Leitungsverbindungen 38 auch mit den Ringräumen 22 der ersten und zweiten Kolbenzylindereinheit 2, 4 hydraulisch verbunden. Durch diese erfindungsgemäße Zusammenschaltung bilden die beiden ersten Kolbenzylindereinheiten 2 und 4 eine erste Gruppe 40 und die beiden anderen Kolbenzylindereinheiten 6 und 8 eine zweite Gruppe 42. Ferner sind hierdurch erfindungsgemäß zwei hydraulisch voneinander getrennte, separate Hydraulikkreisläufe A und B zwischen den Kolbenzylindereinheiten 2 bis 8 gebildet. Dabei ist erfindungsgemäß mit jedem der beiden Hydraulikkreisläufe A, B einer der hydropneumatischen Federspeicher 10, 12 verbunden. Der erste Federspeicher 10 ist über eine Leitungsverbindung 44 und einen Abzweigpunkt 46 an die Leitungsverbindung 32 des ersten Hydraulikkreislaufs A angeschlossen. Entsprechend ist der zweite Federspeicher 12 über eine Leitungsverbindung 48 und einen Abzweigpunkt 50 an die Leitungsverbindung 36 des zweiten Hydraulikkreislaufs B angeschlossen. Dabei liegt erfindungsgemäß jeder Abzweigpunkt 46, 50 sowohl zwischen den Zylinderräumen 20 der einen Gruppe 40 bzw. 42 als auch zwischen den hiermit verbundenen Ringräumen 22 der jeweils anderen Gruppe 42 bzw. 40.

In einer Weiterbildung der Erfindung ist unmittelbar beidseitig jedes Abzweigpunktes 46, 50 in den Leitungsverbindungen 32 und 36 jeweils eines von insgesamt vier Drosselventilen 52, 54, 56 und 58 angeordnet. Jedes dieser Drosselventile besitzt je nach Strömungsrichtung des Hydraulikmediums unterschiedliche Strömungswiderstände derart, daß jeweils einer Strömung in Richtung des Abzweigpunktes 46 bzw. 50 ein geringer Strömungswiderstand und einer entgegengesetzten Strömung aus Richtung des Abzweigpunktes 46 bzw. 50 ein hoher Strömungswiderstand entgegenwirkt. Der Zweck dieser Ausgestaltung wird im folgenden noch näher erläutert werden.

Weiterhin besitzt jede Kolbenzylindereinheit 2 bis 8 vorzugsweise zumindest eine in Einfederungsrichtung wirkende, hydraulische Endlagendämpfung. Vorzugsweise ist hierzu innerhalb jedes Zylinders 14 ein axialer Steuerstift 60 angeordnet, der sich ausgehend von dem geschlossenen Zylinderende in Richtung des axialen, den Zylinderraum 20 mit dem Anschluß 24 verbindenden Kanals 28 des Kolbens 16 und der Kolbenstange 18 erstreckt. Dabei besitzt der Steuerstift 60 erfindungsgemäß einen sich in Richtung seines freien Endes derart reduzierenden Querschnitt, daß zwischen dem in den Kanal 28 eintauchenden Steuerstift 60 und dem Kanal 28 ein Drosselkanal mit einem sich in Abhängigkeit von der Kolbenbewegung verändernden Strömungsquerschnitt gebildet ist. Der Strömungsquerschnitt verringert sich dabei in Einfederungsrichtung des Kolbens 16. Dabei ist es wesentlich, daß dieser Drosselkanal in der Einfederungs-Endlage noch einen bestimmten Mindest-Strömungsquerschnitt besitzt. Die Wirkungsweise dieser hydraulischen, weg- und geschwindigkeitsabhängigen Endlagendämpfung ist wie folgt: Beim Einfedern der jeweiligen Kolbenzylindereinheit taucht der Steuerstift 60 axial in den Kanal 28 ein, wobei sich der Strömungsquerschnitt des Drosselkanals stetig bis auf einen engen Ringspalt verringert. Hiermit steigt der Drosselwiderstand für den Durchfluß des Hydraulikmediums entsprechend an, so daß folglich die Kolbenbewegung langsam und schonend abgebremst wird. Dabei ist der erwähnte Mindest-Strömungsquerschnitt wesentlich, damit die Kolbenzylindereinheit aus der Einfederungsendlage heraus auch wieder ausfedern kann. Dabei kann vorteilhafterweise die Kolbenzylindereinheit auch sehr sanft aus ihrer Endlage wieder ausfedern. Somit sorgt die erfindungsgemäße Endlagendämpfung einerseits für ein sanftes Abbremsen der Kolbenbewegung beim Einfedern sowie andererseits auch für ein sanftes, zunächst langsames und dann schneller werdendes Ausfedern.

In dem bevorzugten Anwendungsfall des erfindungsgemäßen Federungssystems zum Abstützen eines LKW-Fahrerhauses sind die in zwei Gruppen eingeteilten, insgesamt vier Kolbenzylindereinheiten derart angeordnet, daß die eine Gruppe 40 (Kolbenzylindereinheiten 2 und 4) auf einer Seite, z.B. der linken Seite, und die andere Gruppe 42 (Kolbenzylindereinheiten 6 und 8) auf der anderen Seite, z.B. der rechten Seite, einer in Fahrtrichtung verlaufenden Kippachse X jeweils im seitlichen Bereich der Fahrerkabine angeordnet sind. Dabei sind die beiden Kolbenzylindereinheiten 2, 4 bzw. 6, 8 jeder Gruppe 40, 42 beidseitig einer quer, insbesondere senkrecht, zur Fahrtrichtung bzw. zur Kippachse X verlaufenden Kippachse Y im vorderen und hinteren Bereich der Fahrerkabine angeordnet. Vorzugsweise sind die Kolbenzylindereinheiten etwa symmetrisch zur Achse X und/oder zur Achse Y in Eckpunkten eines Rechteckes angeordnet. Es handelt sich bei dem erfindungsgemäßen Federungssystem somit um eine Vierpunktfederung (Vierpunktabstützung).

In einer vorteilhaften Weiterbildung der Erfindung besitzt das Federungssystem eine hydraulische Nivellierventilanordnung 62, die eingangsseitig mit einer Druckleitung P und einer Tankleitung T eines Hydrauliksystems sowie ausgangsseitig mit den beiden Hydraulikkreisläufen A und B verbunden bzw. verbindbar und dabei derart ausgebildet ist, daß die Hydraulikkreisläufe A, B einzeln, vorzugsweise aber gemeinsam (gleichzeitig) wahlweise entweder mit der Druckleitung P oder der Tankleitung T verbindbar sind. Im dargestellten Ausführungsbeispiel besteht die Nivellierventilanordnung 62 aus zwei einzelnen Schaltventilen 62a und 62b (2/2-Wegeventile), die ausgangsseitig an eine die beiden Hydraulikkreisläufe A, B verbindende Verbindungsleitung 64 angeschlossen sind. Dabei ist es wesentlich, daß in dieser Verbindungsleitung 64 ein Absperrventil 66 (2/2-Wegeventil) angeordnet ist, über das im normalen Betriebszustand die beiden Hydraulikkreisläufe A, B getrennt sind, und das nur zum Zwecke der Nivellierung die beiden Kreisläufe miteinander sowie mit der Nivellierventilanordnung 62 verbindet. Vorzugsweise ist die Verbindungsleitung 64 an jeden Hydraulikkreislauf A, B unmittelbar im Bereich vor den Federspeichern 10, 12, d.h. jeweils im Bereich zwischen den Drosselventilen 52, 54 bzw. 56, 58 angeschlossen.

Es ist erfindungsgemäß weiterhin besonders vorteilhaft, wenn die Federspeicher 10, 12 - wie dargestellt - jeweils als Kolbenspeicher mit einem schwimmend geführten, einen Speicherraum 68 für das Hydraulikmedium von einer mit einem elastisch kompressiblen Medium gefüllten Federkammer 70 trennenden Trennkolben 72 ausgebildet sind. Zusätzlich hierzu ist es besonders zweckmäßig, die Federspeicher 10, 12 jeweils als Druckwandler derart auszubilden, daß jeweils der hydraulische Druck größer als der in der Federkammer 70 herrschende, pneumatische Druck ist. Um diese Druckdifferenz zu erzeugen, besitzt jeweils der Trennkolben 72 jedes Federspeichers 10, 12 zwei unterschiedlich große Druckflächen. Die der Federkammer 70 zugekehrte, von dem pneumatischen Druck beaufschlagte, erste Druckfläche ist dabei erfindungsgemäß größer als die gegenüberliegende, von dem hydraulischen Druck in dem Speicherraum 68 beaufschlagte, zweite Druckfläche. Um diese Flächendifferenz zu gewährleisten, ist der Trennkolben 72 mit einer Trennkolbenstange 74 verbunden, die sich durch den Speicherraum 68 hindurch sowie abgedichtet aus dem Speichergehäuse 76 nach außen erstreckt. Somit ist jeweils der Speicherraum 68 ringförmig, die Trennkolbenstange 74 umschließend ausgebildet. Über eine Variation des Verhältnisses zwischen den beiden Druckflächen des Trennkolbens 72 läßt sich hierbei erfindungsgemäß auch das Druckverhältnis zwischen dem hydraulischen und dem pneumatischen Druck verändern. Der besondere Vorteil dieser Ausgestaltung ist, daß eine sehr flache, weiche Federkennlinie realisiert werden kann. Ferner ist dies für die Abdichtung der Federkammer, d.h. für die Trennkolbendichtung, vorteilhaft, denn es kann hier eine gegenüber einer Gasdichtung einfachere Öl- bzw. Flüssigkeitsdichtung verwendet werden, da ja dem pneumatischen Druck stets der höhere Hydraulikdruck entgegenwirkt.

Im folgenden soll nun noch die Funktion des erfindungsgemäßen Federungssystems genauer erläutert werden.

In jeder Kolbenzylindereinheit entsteht auf der Seite des Zylinderraums 20 eine den Kolben 16 beaufschlagende Kolbenkraft $F_K$ aus dem Produkt hydraulischer Druck mal Kolben-Stirnfläche. Auf der gegenüberliegenden Seite des Ringraums 22 ergibt sich eine Kolbenkraft $F_R$ durch Druckbeaufschlagung der Kolben-Ringfläche. Damit ergibt sich die Zylinder-Tragkraft $F_Z$ aus der Differenz Kolbenkraft $F_K$ minus Kolbenkraft $F_R$, d.h. es gilt die Beziehung

$$F_Z = F_K - F_R.$$

Bei den Federungsbewegungen der einzelnen Kolbenzylindereinheiten werden jeweils bestimmte Volumina des Hydraulikmediums verdrängt. Beim Einfedern wird jeweils aus dem Zylinderraum 20 ein Volumen $V_Z = A_{20} \cdot \Delta x$ verdrängt ($A_{20}$ = Querschnittsfläche des Zylinderraums 20, $\Delta x$ = Verschiebeweg des Kolbens), während vom Ringraum 22 nur ein geringeres Volumen $V_R = A_{22} \cdot \Delta x$ ($A_{22}$ = Querschnittsfläche des Ringraums 22) aufgenommen wird. Beim Ausfedern ist dies dann entsprechend umgekehrt. Es tritt folglich stets ein Differenzvolumend $\Delta V$ auf, welches sich aus dem Produkt $\Delta V = A_{18} \cdot \Delta x$ ergibt, d.h. aus dem Produkt Querschnittsfläche der Kolbenstange 18 mal Verschiebeweg des Kolbens. Damit ergeben sich aufgrund der erfindungsgemäßen Zusammenschaltung der Kolbenzylindereinheiten und der Federspeicher die folgenden Fälle.

### 1. Fall: Gemeinsame Federung aller Kolbenzylindereinheiten (Parallelfederung)

### Fall 1a: Einfederung

Bei einer gleichmäßigen, symmetrischen Belastung (z.B.Stoßbelastung) werden alle Volumina $V_{20}$ verkleinert und alle Volumina $V_{22}$ in geringerem Verhältnis vergrößert. Dadurch fließt im ersten Hydraulikkreislauf A aus jeder der beiden Kolbenzylindereinheiten 2 und 4 das entsprechende Differenzvolumen $\Delta V$, d.h. insgesamt ein Volumen $2\Delta V = 2 \cdot A_{18} \cdot \Delta x$, in den ersten Federspeicher 10 hinein, wodurch sich das Volumen des kompressiblen Mediums verkleinert, was eine Erhöhung des pneumatischen Vorspanndruckes und damit eine elastische Federwirkung zur Folge hat. Entsprechend fließt auch im zweiten Hydraulikkreislauf B ein Volumen $2\Delta V$ aus den Kolbenzylindereinheiten 6 und 8 in den zweiten Federspeicher 12. Hierbei erfolgt vorteilhafterweise nur eine geringe Dämpfung der Hydraulikströmung, da die Drosselventile 52, 54 bzw. 56, 58 in diesen Strömungsrichtungen ja nur einen geringen Strömungswiderstand besitzen, was durch die voll eingezeichneten Pfeile angedeutet werden soll. Lediglich gegen die Einfederungsendlage hin erfolgt dann eine hydraulische Dämpfung über die oben beschriebenen Endlagendämpfungen der Kolbenzylindereinheiten.

### Fall 1b: Ausfederung

Der beim Einfedern erhöhte pneumatische Druck sorgt dafür, daß das Hydraulikmedium nach Ende der (Stoß-) Belastung jeweils wieder aus den Federspeichern 10 bzw. 12 und den Ringräumen zurück in die Zylinderräume der Kolbenzylindereinheiten strömt, und zwar bis sich wieder ein Kräftegleichgewicht einstellt. Dies dürfte ohne weiteres nachvollziehbar sein. Hierbei wird nun vorteilhafterweise eine hohe Dämpfung durch die Drosselventile 52 bis 58 bewirkt, was durch die gestrichelt eingezeichneten Pfeile veranschaulicht wird. Dabei ist die jeweilige Dämpfung vorzugsweise veränderbar (einstellbare Drosselventile).

2. Fall: Neigen bzw. Kippen um die Achse X (z.B. bei Kurvenfahrt)

Beispielsweise federn hierbei die Kolbenzylindereinheiten 2 und 4 der ersten Gruppe 40 um einen Weg $\Delta x$ ein, während die Kolbenzylindereinheiten 6 und 8 der zweiten Gruppe 42 um den gleichen Betrag $\Delta x$ ausfedern. Hierdurch strömt in dem ersten Hydraulikkreislauf A ein Gesamtvolumen $\Delta V_g$ in den Federspeicher 10, welches der Summe aller Volumina entspricht, die einerseits aus den Zylinderräumen 20 der Kolbenzylindereinheiten 2 und 4 der ersten Gruppe 40 sowie andererseits aus den Ringräumen 22 der Kolbenzylindereinheiten 6 und 8 der zweiten Gruppe 42 verdrängt werden. Es ergibt sich $\Delta V_g = \Delta x (2A_{20} + 2A_{22}) = 2\Delta x (A_{20} + A_{22})$. Dies hat aufgrund der Größe des Volumens $\Delta V_g$ einen erheblichen Druckanstieg im Federspeicher 10 zur Folge. Gleichzeitig strömt im zweiten Hydraulikkreislauf B aus dem zweiten Federspeicher 12 ein entsprechendes Volumen $\Delta V_g$ einerseits in die Zylinderräume 20 der Kolbenzylindereinheiten 6 und 8 der zweiten Gruppe 42 sowie andererseits in die Ringräume 22 der Kolbenzylindereinheiten 2 und 4 der ersten Gruppe 40, wodurch sich hier der pneumatische Vorspanndruck im Federspeicher 12 erheblich verringert. Die Federung wird demzufolge auf der einfedernden Seite wesentlich härter und auf der ausfedernden Seite wesentlich weicher, was vorteilhafterweise zu einem selbsttätigen Kippausgleich, d.h. zu einer Unterbindung von übermäßigen Kippbewegungen führt.

3. Fall: Neigen bzw. Kippen um die Achse Y (z.B. beim Bremsen oder Beschleunigen)

Beispielsweise federn hierbei in den Gruppen 40 und 42 die jeweils vorderen Kolbenzylindereinheiten 2 und 6 um $\Delta x$ ein, während die hinteren Kolbenzylindereinheiten 4 und 8 um $\Delta x$ ausfedern. Hierbei strömt aufgrund der erfindungsgemäßen Verschaltung in die Federspeicher 10,12 bzw. aus den Federspeichern 10, 12 kein Hydraulikmedium, sondern es treten lediglich Ausgleichsströmungen zwischen den Kolbenzylindereinheiten auf. Eine Stabilisierung erfolgt hierbei ausschließlich durch Dämpfung der Hydraulikströmungen mittels der Drosselventile 52 bis 58 und gegebenenfalls mittels der hydraulischen Endlagendämpfungen der Kolbenzylindereinheiten. Hierbei ist es besonders vorteilhaft, die hinsichtlich ihrer Drossel- bzw. Dämpfungswirkung einstellbaren Drosselventile 52 bis 58 in Abhängigkeit von auf die abgestützte Masse, insbesondere die Fahrerkabine, wirkenden Beschleunigungskräften zu verstellen, und zwar derart, daß z.B. in einem Fahrzeug beim Bremsen die Strömungen von den vorderen Kolbenzylindereinheiten 2 und 6 in Richtung der hinteren Kolbenzylindereinheiten 4 und 8 stark gedämpft werden, während beim Beschleunigen jeweils die umgekehrten Strömungen stark gedämpft werden. Dabei kann zur Ansteuerung der Drosselventile 52 bis 58 der jeweilige Fahrzeug-Bremsdruck oder eine sonstige Größe (Beschleunigungssignal) verwendet werden, die Aufschluß über den jeweiligen Beschleunigungszustand gibt. So können die Kolbenzylindereinheiten auch mit Wegaufnehmern ausgestattet sein, die Signale erzeugen, mit denen sich die jeweils auftretende Kippbewegung ermitteln läßt, so daß hierdurch auch die Drosselventile entsprechend verstellt werden können. Durch diese vorteilhaften Maßnahmen erfolgt somit auch ein selbsttätiger Kippausgleich gegen Kippbewegungen um die Querachse Y.

4. Fall: Neigen bzw. Kippen um eine diagonale Achse $Z_1$ bzw. $Z_2$

Beispielsweise erfolgt bei einem durch eine unsymmetrische Belastung im Bereich nur einer der Kolbenzylindereinheiten ausgelösten Kippen um die durch die Kolbenzylindereinheiten 4 und 6 verlaufende Achse $Z_1$ eine Einfederung der Kolbenzylindereinheit 2 um einen Weg $\Delta x$ sowie eine Ausfederung der Kolbenzylindereinheit 8 ebenfalls um $\Delta x$, während die auf der Achse $Z_1$ liegenden Kolbenzylindereinheiten 4 und 6 zunächst unverändert in ihrer bisherigen Niveaulage verbleiben. Aufgrund der Verbindung des Zylinderraums 20 der Kolbenzylindereinheit 2 mit dem Ringraum 22 der Kolbenzylindereinheit 8 strömt somit ein Volumen $\Delta V = \Delta x (A_{20} + A_{22})$ in den ersten Federspeicher 10, dessen Druck hierdurch ansteigt. Gleichzeitig strömt aber auch aus dem zweiten Speicher 12 ein entsprechendes Volumen $\Delta V$ in den Ringraum 22 der Kolbenzylindereinheit 2 und den Zylinderraum 20 der Kolbenzylindereinheit 8, wodurch hier der Druck entsprechend abfällt. Diese Druckänderungen der beiden Federspeicher 10 und 12 haben nun aber zur Folge, daß einerseits im ersten Hydraulikkreislauf A Hydraulikmedium auch in den Zylinderraum 20 der Kolbenzylindereinheit 4 sowie in den Ringraum 22 der Kolbenzylindereinheit 6 strömen muß, und andererseits im zweiten Hydraulikkreislauf B auch aus dem Zylinderraum 20 der Kolbenzylindereinheit 6 und dem Ringraum 22 der Kolbenzylindereinheit 4 Hydraulikmedium heraus in den zweiten Federspeicher 12 strömen muß (selbsttätiger Druckausgleich). Somit werden derartige "Diagonal-Kippbewegungen" stets selbsttätig in Kippbewegungen um die Achse Y umgewandelt (vgl. hierzu den oben beschriebenen 3. Fall).

Abschließend soll nun noch kurz die Nivellierung erläutert werden. Soll im statischen Zustand des Federungssystems die Niveaulage aller Kolbenzylindereinheiten gleichmäßig verändert werden, so wird zunächst das Absperrventil 66 in seine Durchflußstellung geschaltet, wodurch die beiden Hydraulikkreisläufe A und B miteinander verbunden werden. Über die angeschlossene Nivellierventilanordnung 62 kann dann zum Anheben Hydraulikmedium aus der Druckleitung P über das Schaltventil 62a zugeführt oder zum Absenken über das Schaltventil 62b Hydraulikmedium in Richtung der Tankleitung T abgelassen werden. Schließlich ist dann das Absperrventil 66 wieder in seine die Hydraulikkreisläufe A, B voneinander trennende Sperrstellung zu schalten.

Die Erfindung ist nicht auf das dargestellte und beschriebene, konkrete Ausführungsbeispiel beschränkt, sondern umfaßt auch alle im Sinne der in den Ansprüchen definierten Erfindung gleichwirkenden Ausführungen.

**Patentansprüche**

1. Hydropneumatisches Federungssystem zur federnden Abstützung einer Masse, insbesondere einer Fahrerkabine eines Lastkraftwagens oder dergleichen,

   1.1 mit mindestens vier die Masse abstützenden, hydraulischen Kolbenzylinderreinheiten (2,4,6,8), dadurch gekennzeichnet, daß die Kolbenzylindereinheiten jeweils einen Zylinderraum (20) und einen von diesem über einen Kolben (16) getrennten, eine Kolbenstange (18) umschließenden Ringraum (22) besitzen,

   1.2 wobei die Kolbenzylindereinheiten (2,4,6,8) in zwei Gruppen (40, 42) eingeteilt sind,

   1.2.1 indem die Zylinderräume (20) der Kolbenzylindereinheiten (2,4) der ersten Gruppe (40) einerseits miteinander und andererseits mit den Ringräumen (22) der Kolbenzylindereinheiten (6, 8) der zweiten Gruppe (42) verbunden sind,

   1.2.2 und indem die Zylinderräume (20) der Kolbenzylindereinheiten (6, 8) der zweiten Gruppe (42) einerseits miteinander und andererseits mit den Ringräumen (22) der Kolbenzylindereinheiten (2, 4) der ersten Gruppe (40) verbunden sind,

   1.2.3 wodurch zwei hydraulisch voneinander getrennte, separate Hydraulikkreisläufe (A, B) zwischen den Kolbenzylindereinheiten (2, 4, 6, 8) gebildet sind,

   1.3 wobei mit jedem der beiden Hydraulikkreisläufe (A, B) mindestens ein hydropneumatischer Federspeicher (10, 12) verbunden ist.

2. Federungssystem nach Anspruch 1, dadurch gekennzeichnet, daß in jedem Hydraulikkreislauf (A, B) der Federspeicher (10, 12) an einem Abzweigpunkt (46, 50) angeschlossen ist, der sowohl zwischen den Zylinderräumen (20) der einen Gruppe (40/42) als auch zwischen den hiermit verbundenen Ringräumen (22) der jeweils anderen Gruppe (42/40) angeordnet ist.

3. Federungssystem nach Anspruch 2, dadurch gekennzeichnet, daß unmittelbar beidseitig jedes Abzweigpunktes (46, 50) in jeweils einer zu den Kolbenzylindereinheiten führenden Leitungsverbindung (32, 36) jeweils ein vorzugsweise einstellbares Drosselventil (52, 54, 56, 58) angeordnet ist, wobei jedes Drosselventil je nach Strömungsrichtung des Hydraulikmediums unterschiedliche Strömungswiderstände derart besitzt, daß jeweils einer Strömung in Richtung des Abzweigpunktes (46, 50) ein geringer Strömungswiderstand und einer entgegengesetzten Strömung aus Richtung des Abzweigpunktes (46, 50) ein hoher Strömungswiderstand entgegenwirkt.

4. Federungssystem nach einem oder mehreren der Ansprüche 1 bis 3, dadurch gekennzeichnet, daß jede Kolbenzylindereinheit (2, 4, 6, 8) zumindest eine in Einfederungsrichtung wirkende, hydraulische Endlagendämpfung aufweist.

5. Federungssystem nach einem oder mehreren der Ansprüche 1 bis 4, dadurch gekennzeichnet, daß die zu federnde Masse über insgesamt vier Kolbenzylindereinheiten (2, 4, 6, 8) abgestützt ist, wobei zur Abstützung einer Fahrerkabine eines Kraftfahrzeuges die eine Gruppe (40) der Kolbenzylindereinheiten auf einer Seite und die andere Gruppe (42) auf der anderen Seite einer in Fahrtrichtung verlaufenden Kippachse (X) jeweils im seitlichen Bereich der Fahrerkabine angeordnet sind, und wobei die beiden Kolbenzylindereinheiten (2, 4; 6, 8) jeder Gruppe (40, 42) beidseitig einer quer zur Fahrtrichtung verlaufenden Kippachse (Y) im vorderen und hinteren Bereich der Fahrerkabine angeordnet sind.

6. Hydropneumatisches Federungssystem nach einem oder mehreren der Ansprüche 1 bis 5, dadurch gekennzeichnet, eine Nivellierventilanordnung (62), die eingangsseitig mit einer Druckleitung (P) und einer Tankleitung (T) eines Hydrauliksystems sowie ausgangsseitig mit den beiden Hydraulikkreisläufen (A, B) verbunden bzw. verbindbar und dabei derart ausgebildet ist, daß die Hydraulikkreisläufe (A, B) alternativ oder gleichzeitig wahlweise mit der Druckleitung (P) oder der Tankleitung (T) verbindbar sind.

7. Federungssystem nach Anspruch 6, **dadurch gekennzeichnet,** daß die Nivellierventilanordnung (62) an eine die beiden Hydraulikkreisläufe (A, B) verbindende Verbindungsleitung (64) angeschlossen ist, wobei in dieser Verbindungsleitung (62) ein Absperrventil (66) angeordnet ist, und wobei diese Verbindungsleitung (64) die Hydraulikkreisläufe (A, B) vorzugsweise unmittelbar vor den Federspeichern (10, 12) verbindet.

8. Federungssystem nach einem oder mehreren der Ansprüche 1 bis 7, **dadurch gekennzeichnet,** daß die Federspeicher (10, 12) jeweils als Kolbenspeicher mit einem schwimmend geführten, von einen Speicherraum (68) für das Hydraulikmedium einer mit einem elastisch kompressiblen Medium gefüllten Federkammer (70) trennenden Trennkolben (72) ausgebildet sind.

9. Federungssystem nach Anspruch 8, **dadurch gekennzeichnet,** daß die Federspeicher (10, 12) jeweils als Druckwandler derart ausgebildet sind, daß jeweils der hydraulische Druck größer als der in der Federkammer (70) herrschende, pneumatische Druck ist.

10. Federungssystem nach einem oder mehreren der Ansprüche 3 bis 9, **dadurch gekennzeichnet,** daß die Drosselventile (52 bis 58) zum Verstellen ihrer Drosselwirkung anhand von auf die abgestützte Masse wirkenden Beschleunigungskräften oder anhand von sonstigen, hierzu proportionalen Signalen angesteuert werden.

## Claims

1. Hydropneumatic suspension system for suspension support of a mass, in particular a driver's cab of a heavy goods vehicle or the like,
    1.1 having at least four hydraulic piston-and-cylinder units (2, 4, 6, 8) which support the mass, characterized in that the piston-and-cylinder units each have a cylinder space (20) and an annular space (22) which is separated therefrom by a piston (16) and surrounds a piston rod (18),
    1.2 the piston-and-cylinder units (2, 4, 6, 8) being divided into two groups (40, 42),

    1.2.1 with the cylinder spaces (20) of the piston-and-cylinder units (2, 4) of the first group (40) being connected on the one hand to each other and on the other hand to the annular spaces (22) of the piston-and-cylinder units (6, 8) of the second group (42),
    1.2.2 and with the cylinder spaces (20) of the piston-and-cylinder units (6, 8) of the second group (42) being connected on the one hand to each other and on the other hand to the annular spaces (22) of the piston-and-cylinder units (2, 4) of the first group (40),
    1.2.3 as a result of which two separate hydraulic circuits (A, B) which are separated from each other hydraulically are formed between the piston-and-cylinder units (2, 4, 6, 8),
    1.3 at least one hydropneumatic spring energy store (10, 12) being connected to each of the two hydraulic circuits (A, B).

2. Suspension system according to Claim 1, characterized in that the spring energy store (10, 12) is joined in each hydraulic circuit (A, B) at a branching point (46, 50) which is arranged both between the cylinder spaces (20) of the one group (40/42) and between the annular spaces (22), connected thereto, of the respectively other group (42/40).

3. Suspension system according to Claim 2, characterized in that directly on either side of each branching point (46, 50), in each case in a line connection (32, 36) leading to the piston-and-cylinder units, there is arranged in each case a preferably adjustable throttle valve (52, 54, 56, 58), each throttle valve having different flow resistances in dependence on the direction of flow of the hydraulic medium such that in each case a low flow resistance counters a flow in the direction of the branching point (46, 50) and a high flow resistance counters an opposing flow in the direction away from the branching point (46, 50).

4. Suspension system according to one or more of Claims 1 to 3, characterized in that each piston-and-cylinder unit (2, 4, 6, 8) has at least one hydraulic limit position damping means acting in the direction of spring deflection.

5. Suspension system according to one or more of Claims 1 to 4, characterized in that the mass to which suspension is to be applied is supported by way of a total of four piston-and-cylinder units (2, 4, 6, 8), for the supporting of a driver's cab of a motor vehicle the one group (40) of the piston-and-cylinder units being arranged on one side and the other group (42) being arranged on the other side of a tilt axis (X) running in the direction of travel in each case in the lateral region of the driver's cab, and the two piston-and-cylinder units (2, 4; 6, 8) of each group (40, 42) being arranged on either side of a tilt axis (Y) running transversely to the direction of travel in the front and rear regions of the driver's cab.

6. Hydropneumatic suspension system according to one or more of Claims 1 to 5, characterized by a levelling valve arrangement (62) which is connected or connectable on the input side to a pressure line (P) and a fuel intake line (T) of a hydraulic system and on the output side to the two hydraulic circuits (A, B), and at the same time being constructed such that the hydraulic circuits (A, B) are connectable alternately or simultaneously to the pressure line (P) or the fuel intake line (T) selectively.

7. Suspension system according to Claim 6, characterized in that the levelling valve arrangement (62) is attached to a connection line (64) which connects the two hydraulic circuits (A, B), there being arranged in this connection line (62) a shut-off valve (66), and this connection line (64) connecting the hydraulic circuits (A, B) preferably directly upstream of the spring energy stores (10, 12).

8. Suspension system according to one or more of Claims 1 to 7, characterized in that the spring energy stores (10, 12) are each constructed as a piston-type store having a separating piston (72) which is guided to be floating and which separates a store space (68) for the hydraulic medium from a spring energy chamber (70) filled with a resiliently compressible medium.

9. Suspension system according to Claim 8, characterized in that the spring energy stores (10, 12) are each constructed as a pressure transducer such that in each case the hydraulic pressure is greater than the pneumatic pressure prevailing in the spring energy chamber (70).

10. Suspension system according to one or more of Claims 3 to 9, characterized in that the throttle valves (52 to 58) are triggered for the adjustment of their throttle action by way of acceleration forces acting on the supported mass or by way of other signals proportional thereto.

**Revendications**

1. Système de suspension hydropneumatique pour le soutien élastique d'une masse, en particulier d'une cabine de conducteur d'un véhicule utilitaire ou analogue, comportant au moins quatre unités cylindre-piston (2, 4, 6, 8) qui soutiennent la masse,
caractérisé par le fait que les unités cylindre-piston présentent chacune un espace cylindrique (20) et un espace annulaire (22) séparé du premier par un piston (16) et entourant une tige de piston (18), les unités cylindre-piston (2, 4, 6, 8) étant réparties en deux groupes (40, 42), les espaces cylindriques (20) des unités cylindre-piston du premier groupe (40) étant d'une part reliés entre eux et d'autre part, aux espaces annulaires (22) des unités cylindre-piston (6, 8) du deuxième groupe (42), et les espaces cylindriques (20) des unités cylindre-piston (6, 8) du deuxième groupe étant reliés d'une part entre eux et d'autre part, aux espaces annulaires (22) des unités cylindre-piston (2, 4) du premier groupe (40) pour constituer ainsi entre les unités cylindre-piston (2, 4, 6, 8) deux circuits hydrauliques (A, B) séparés hydrauliquement entre eux, au moins un réservoir élastique (10, 12) étant relié à chacun des deux circuits hydrauliques (A, B).

2. Système de suspension selon la revendication 1, caractérisé par le fait que, dans chaque circuit hydraulique (A, B), le réservoir élastique (10, 12) est relié à un point de branchement (46, 50) disposé aussi bien entre les espaces cylindriques (20) d'un groupe (40, 42) qu'entre les espaces annulaires (22) reliés à ceux-ci de l'autre groupe respectivement (40, 42).

3. Système de suspension selon la revendication 2, caractérisé par le fait qu'immédiatement de part et d'autre de chaque point de branchement (46, 50), est disposée une valve d'étranglement (52, 54, 56, 58) de préférence réglable, respectivement dans une connexion (32, 36) menant à l'une des unités cylindre-piston, chaque valve d'étranglement possédant, en fonction de la direction de circulation de l'agent hydraulique, des résistances hydrauliques différentes, de manière à ce que soit opposé respectivement une faible résistance à un courant circulant dans la direction du point de branchement (46, 50) et une résistance élevée à un courant inverse venant de la direction du point de branchement.

4. Système de suspension selon l'une ou plusieurs des revendications 1 à 3,
caractérisé par le fait que chaque unité cylindre-piston (2, 4, 6, 8) présente au moins un moyen d'amortissement en position terminale agissant dans la direction de compression.

5. Système de suspension selon l'une ou plusieurs des revendications 1 à 4, caractérisé par le fait que la masse à suspendre est soutenue par quatre unités cylindre-piston au total (2, 4, 6, 8), l'un des deux groupes d'unités cylindre-piston (40) étant placé d'un côté et l'autre groupe (42) de l'autre côté d'un axe d'inclinaison (X) s'étendant dans la direction de déplacement, en vue de soutenir une cabine de conducteur d'un véhicule utilitaire, respectivement dans la région latérale de ladite cabine, les deux unités cylindre-piston (2, 4 ; 6, 8) de chaque groupe (40, 42) étant disposées de part et d'autre d'un axe d'inclinaison (Y) s'étendant transversalement à la direction de déplacement, dans la région antérieure et postérieure de la cabine de conducteur.

6. Système de suspension hydropneumatique selon l'une ou plusieurs des revendications 1 à 5, caractérisé par un dispositif de nivellement (62) dont l'entrée est reliée à une conduite de pression (P) et une conduite d'alimentation (T) d'un système hydraulique, et dont la sortie est reliée ou peut être reliée aux deux circuits hydrauliques (A, B), ce dispositif étant agencé de manière à ce que les circuits hydrauliques (A, B) puissent être reliés au choix alternativement ou simultanément à la conduite de pression (P) ou à la conduite d'alimentation (T).

7. Système de suspension selon la revendication 6, caractérisé par le fait que le dispositif de nivellement (62) est connecté à une conduite (64) qui relie les deux circuits hydrauliques (A, B), une valve de fermeture (66) étant disposée dans ladite conduite (64), cette conduite (64) reliant les circuits hydrauliques (A, B) de préférence immédiatement en amont des réservoirs élastiques (10, 12).

8. Système de suspension selon l'une ou plusieurs des revendications 1 à 7, caractérisé par le fait que les réservoirs élastiques (10, 12) se présentent chacun sous la forme d'un réservoir à piston, comprenant un piston de séparation (72) flottant, séparant un réservoir (68) d'agent hydraulique d'une chambre élastique (70) remplie d'un agent qui peut être comprimé élastiquement.

9. Système de suspension selon la revendication 8, caractérisé par le fait que les réservoirs élastiques (10, 12) se présentent chacun sous la forme d'un convertisseur de pression tel que la pression hydraulique soit respectivement supérieure à la pression pneumatique régnant dans la chambre élastique (70).

10. Système de suspension selon l'une ou plusieurs des revendications 3 à 9, caractérisé par le fait que les valves d'étranglement (52 à 58) sont commandées par des forces d'accélération agissant sur la masse soutenue ou par d'autres signaux, proportionnels à ces forces, en vue d'ajuster leur effet d'étranglement.

EP 0 495 442 B1

10